# EUROPEAN PATENT APPLICATION

(11) **EP 2 453 396 A1**
(43) Date of publication of application: **16.05.2012**
(21) Application number: 10306237.8
(22) Date of filing: 10.11.2010
(51) Int. Cl.: G06Q 10/00, G06Q 30/00

(54) **A method, a system, a server, a terminal, a computer program and a computer program product for managing warranty information in a computer network**

(71) Applicant: Alcatel Lucent, 75007 Paris (FR)
(72) Inventor:
(74) Representative: Brose, Gerhard

(57) **Abstract**

The invention concerns a method, a system, a server, a terminal, a computer program and a computer program product for managing warranty information in a computer network (100), wherein
- an information about a product is determined, in particular by a server (102) from a message,
- an information about a warranty associated with said product is determined depending on said information about said product, in particular by said server (102),
- an identifier identifying a customer is determined., in particular by said server (102) from said message, and
- a storage comprises information about said identifier associated with said information about said warranty.

## Description

### Field of the invention

The invention relates to a method, a system, a server, a client, a computer program and a computer program product for managing warranty information in a computer network.

### Background

When customers buy products they often get warranty for these products. They need to keep the receipt to claim this warranty.

Keeping a lot of receipts is cumbersome and there is a high risk of loosing receipts before the warranty period for a product ends.

### Summary

The object of the invention is thus to provide a simplified more reliable way of managing warranty.

The main idea of the invention is a method for managing warranty information in a computer network, wherein
- an information about a product is determined, in particular by a server from a message,
- an information about a warranty associated with said product is determined depending on said information about said product, in particular by said server,
- an identifier identifying a customer is determined, in particular by said server from said message, and
- a storage comprises information about said identifier associated with said information about said warranty.

This means that an electronic warranty system, e.g. customer card and online service, is used to manage warranty information,

Advantageously said information about said warranty, said information about said product and said identifier are associated and stored, in particular in a data base.

This allows easy deleting of said warranty information when said-warranty period expired, allows said user to extent his/her warranty period.

Advantageously customer review information is associated with said identifier and stored, in particular in said data base, Such review is very reliable due to the fact that each customer is confirmed as owner of said product.

Advantageously a notification is sent depending on information about said identifier and said information about said product. This way notifications about firmware or software updates relating products under warranty are easily sent to the affected customer.

Further developments of the invention can be gathered from dependent claims and the following description.

### Brief description of the figures

In the following the invention will be explained further making reference to the attached drawings.
Fig. 1 schematically a first part of a computer network.
Fig. 2 schematically shows a first flow chart, showing some typical steps in a first method.
Fig. 3 schematically shows a second flow chart, showing some typical steps in a second method.
Fig. 4 schematically shows a third flow chart, showing some typical steps in a third method.

### Description of the embodiments

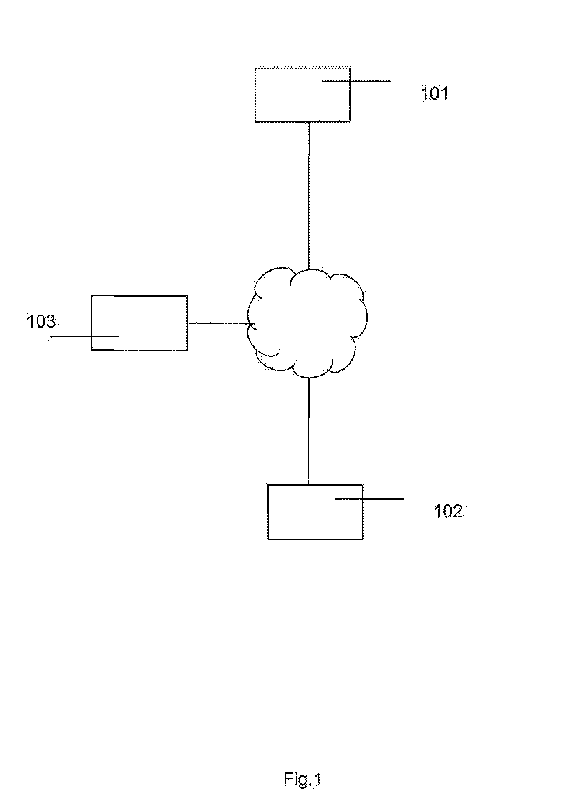

Figure 1 shows a first part of a computer network 100.

Said computer network 100 comprises a terminal 101, a server 102, a client 103 and data links.

Said terminal 101, said server 102 or said client 103 are for example connected via said data links using the transmission control protocol / internet protocol (well known as TCP/IP).

Any other type of connection, e.g. according to the well known Ethernet standard, may be used.

Said connection may be direct, or via many other computers of said computer network 100. The latter case is depicted in figure 1 using a cloud symbol.

Said terminal 101 is for example a cash register. Said terminal 101 is adapted to read an electronic token, for example a magnet strip card according to ISO-Norm 7811:2003.

Said terminal 101 may be adapted to read any other type of electronic token, like an integrated circuit card or a radio frequency identification card.

An identifier, e.g. a number, is stored on said electronic token.

Said terminal 101 is adapted to read said identifier from said electronic token.

Said terminal 101 is for example adapted to read said identifier from said magnetic strip card via a card reader.

Alternatively or additionally said terminal 101 may be adapted to prompt for user input of said identifier and determine said identifier from user input via a user interface, e.g. a keyboard or a touch screen.

Additionally said terminal 101 is adapted to read information about a product. Said information is for example a bar code according to the GS1 standard, for example a Universal Product Code (well known as UPC) or a European Article Number (well known as EAN).

For example said terminal 101 comprises a barcode scanner adapted to read said GS1 bar code, e.g. said Universal Product Code or said European Article Number.

Any other type of information about said product, e.g. a product name may be used instead. Said terminal 101 may be adapted to prompt for user input regarding said information about said product and to determine said information about said product from user input.

Furthermore said terminal 101 is adapted to determine a request type. For example said terminal 101 is adapted to prompt for user input regarding said request type and determine said request type from said user input. Said request type is for example "new warranty", "warranty claim" or "warranty summary".

Said terminal 101 is adapted to determine and send a first message including said identifier and said information about said product to said server 102.

Optionally information about a shopping place, a receipt number or a warranty period may be added to said first message.

Said information about said shopping place is for example a name of said shopping place that is stored in and read from a storage in said terminal 101.

Said warranty period is for example an integer number, e.g. signifying an amount of month that is prompted for by said terminal 101 and determined by said terminal 101 from said user input via said user interface.

Said receipt number is for example the number of the receipt that is printed out by said cash register. Said receipt number is for example prompted for by said terminal 101 and determined by said terminal 101 from said user input via said user interface. Alternatively said receipt number is read by said terminal from storage, e.g. a transaction database in said terminal 101.

Said terminal 101 is for example adapted to determine said first message as a hyper text markup language "PUT" request, well known as HTML "PUT".

Said terminal 101 is furthermore adapted to determine and send a second message. Said second message contains also said identifier and may contain the same information as said first message.

Said second message is for example determined in the same way as said first message.

Said terminal 101 is for example adapted to determine said second message as a hyper text markup language "GET" request, well known as HTML "GET".

Said terminal 101 is for example adapted to send said first message or said second message using the transmission control protocol internet protocol, well known as TCP/IP.

Said first, message is for example determined and sent whenever said request type is "new warranty" and said identifier is read from said electronic token,

Said second message is for example determined and sent whenever said request type is warranty claim" and said identifier is read from said electronic token.

This means that said first message is sent in order to start a new warranty for a product. Said second message is sent in order to confirm a warranty claim by a customer.

Optionally said request type is included, e.g. as string "new warranty" or "warranty claim" in said first message or said second message,

Said server 102 is adapted to receive said first message and said second message.

Said server 102 is for example adapted to determine said identifier and said information about said product from said hyper text markup language "PUT" or "GET" request.

Furthermore said server 102 is adapted to distinguish said request type, i.e. said first message from said second message, e.g. by identifying whether it is a HTML "PUT" or a "GET" or by using said request type string included in said first message or said second message.

Optionally said information about said shopping place or said warranty period may be determined by said server 102 from said first message.

Optionally said information about said warranty period may be read from storage on said server 102. In this case, said server 102 is adapted to upon receipt of said first message or said second message determine said information about said warranty period from said storage on said server 102. This is for example determined by finding said warranty start date and said warranty period matching said information about said product, e.g. said Universal Product Code or said European Article Number in a data base.

Optionally said information, about said warranty period may be received from a computer in said computer network 100, e.g. a storage of a manufacturer of said product. In this case said server 102 is adapted to upon receipt of said first message or said second message send a request to said storage of said manufacturer of said product.

Said request is for example a hyper text markup language "GET" request including said information about said product, e.g. said Universal Product Code or said European Article Number.

Said server 102 in this case is adapted to pause processing said first message or said second message until a timer has timed out or a response to said request from said storage of said manufacturer.

Said response is for example a hyper text markup language response, for example including said warranty period as said integer number.

Furthermore said server 102 is adapted to determine a warranty end date from a warranty start date and said warranty period, e.g. by adding said warranty period to said warranty start date.

Said warranty start date is for example the current date at the time said first message is received.

Furthermore said server 102 is adapted to store information about said warranty end date, said information about said product and information about said identifier in a data base.

In the example below said identifier is stored in said data base. However the idea extends to any information about said identifier, e.g. a hash value as well.

Said data base is for example on a non volatile, storage of said server 102.

For example said identifier is associated with said warranty end date and said information about said product in said database. Optionally a shop name or a receipt number, for example the same number that is printed by said cash register on a paper receipt, is associated to said identifier as well in said database.

Furthermore said server 102 is adapted to determine an error message, e.g. "time out" in case said reply is not received within a predetermined period of time, e.g. 1 second, or "no warranty", in case no warranty information is available in said data base or upon receipt of a respective reply from said storage of said manufacturer.

Furthermore said server 102 is adapted to confirm validity of said warranty depending on said information about said product and said identifier. To this end said server 102 is adapted to search said identifier, said information about said product or said warranty end date in said data base.

Said server 102 is adapted to confirm said warranty as valid, in case said warranty end date for the product identified by said information, about said product received in said second message has not been reached for the customer identified by said identifier received in said second message.

Said server 102 is adapted to refuse said warranty as invalid, in any other case.

Said server 102 is adapted to send a reply to said first message or said second message to said terminal 101.

Said reply is for example a hyper text markup language message including a result.

For example in the case that said timer times out, said server 102 is adapted to send as said result said error message, e.g. "time out" to said terminal 101.

For example in case said new warranty was added successfully to said data base a string "Success" is sent as said result.

For example in case said new warranty was not added to said data base a string "not successful" is sent as said result.

For example in case said warranty claim is confirmed a string "Confirmed" is sent as said result. Optionally said receipt number in sent in said result as well.

For example in case said warranty claim is invalid a string "Invalid" is sent as said result.

Instead of determining validity of said warranty, said server 102 may be adapted to search said warranty end date associated with said identifier received in said second message. In this case said result for example comprises of said warranty end date, e.g. as a string.

Additionally said server 102 may be adapted to upon receipt of a third message determine warranty information. Said third message comprises said identifier and may comprise said request type, e.g. "warranty summary".

Said third message is for example a hyper text markup language request "GET" including said identifier.

Said warranty information is for example a list of all stored associations of said identifier with the respective information about said product and said warranty end date. Optionally said shop name or said receipt number may be in said list.

In case no association is found said list may be empty or contain an error message, e.g. "no warranty found".

Said server 102 is adapted to send said warranty information in a reply to said third message,

Said reply is for example a hyper text markup language message including said warranty information or said error message.

Optionally said server 102 may be adapted to provide an editing function for said data base. Said editing function comprises for example a user interface, e.g. a web page according to the well known hyper text markup language standard, allowing said user to extent his/her warranty period.

For example said editing function prompts said user for input of a desired amount of warranty extension month and for credit card information to be used for paying for this warranty extension.

In this case said server 102 is adapted to store said credit card information or to forward said credit card information, for example in a hyper text markup language message, to a billing center for charging.

Furthermore in this case said server 102 is adapted to upon successful completion of said editing, determine and store a new warranty end date, e.g. by adding said extension months to the originally stored warranty end date.

Additionally said server 102 may be adapted to delete said warranty information, e.g. said warranty end date, said information about said product or said identifier, when said warranty end date has been reached.

To this end said server 102 may be adapted to determine, for example in a frequently, e.g. monthly recurring process, all warranty end dates for all warranty periods stored in said data base, and delete all expired warranty information.

Additionally said server 102 may be adapted to provide a customer review feature. Said customer review feature may be implemented as part of said web page and may allow customer review of products that are then available to the public, e.g. via said web page. In this case said data base may contain said customer review and an association of it with said information about said product or said identifier. Methods for editing and displaying reviews are well known to the person skilled in the art and not explained here.

Additionally said server 102 may be adapted to provide a notification service to all buyers of said product. This way said user may be informed for example via an additional string in said warranty information or on said web page, about new firmware or software for products said user owns.

To enable said customer to retrieve said warranty information, said third message is for example determined and sent by said client 103 upon user input of said identifier.

Alternatively said client 103 is adapted to read said identifier from said electronic token.

Said client 103 is for example a user equipment, e.g. a smart phone or a personal computer.

Said client 103 is adapted to determine said third message, e.g. from user input via a keyboard of said client 103. Said user input is for example said identifier.

Said client 103 is adapted to send said third message to said server 102, e.g. via said transmission control protocol / internet protocol.

Said client 103 is adapted to receive said warranty information in said reply to said third message.

Said client 103 is adapted to display said warranty information, e.g. via a display. Said warranty information is for example a table containing said product name, said warranty end date and optionally said shop name.

Alternatively said warranty period is used instead of said warranty end date in said data base. In this case said server 102 is adapted to calculate said warranty end date each time it is required, or sends said warranty period as a reply instead of said warranty end date. Said warranty period may be displayed instead of said warranty end date or additionally in said table.

Alternatively or additionally said terminal 101, said server 102 or said client 103 is adapted to encrypt or sign said messages, for example according to the hyper text transfer protocol secure (well known as HTTPS).

Any other type of encryption or signature, e.g. according to the Pretty Good Privacy program (well known as PGP) may be used.

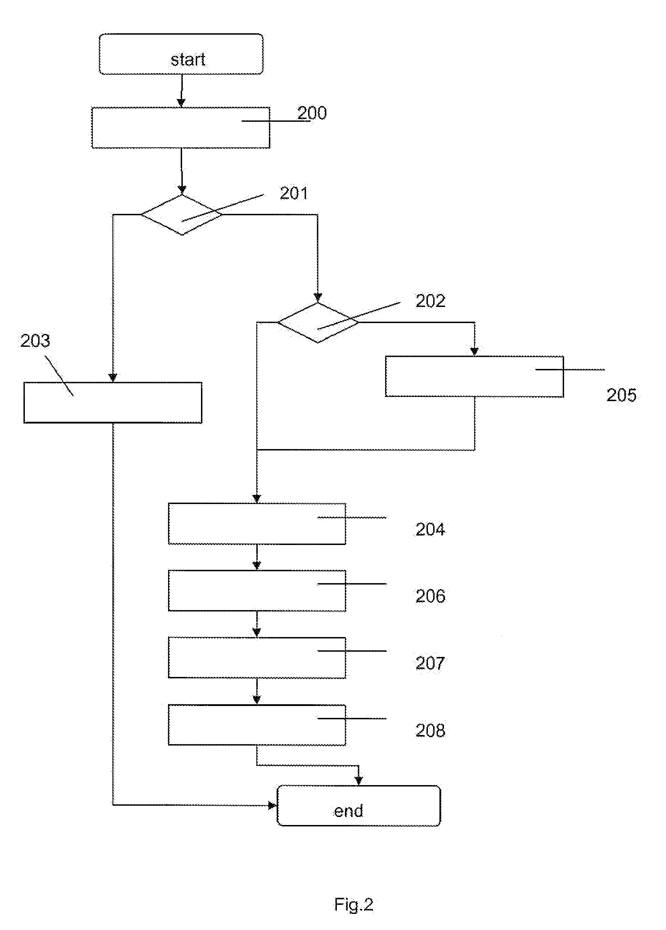

Fig. 2 schematically shows a first flow chart, showing some typical steps in a first method for managing warranty information.

According to said first method, a new warranty is added. Said first method starts, for example, whenever said first message, sent in order to start a new warranty for said product, is received by said server 102.

For example said optional request type is included and said server 102 determines for each incoming message whether it contains said string "new warranty" to identify in said first message.

### After the start a step 200 is executed.

In said step 200 said identifier and said information about said product, e.g. said Universal Product Code or said European Article Number, are determined from said first message, e.g. said hyper text markup language "PUT" request.

Optionally said information about said shopping place, said receipt number or said warranty period may be determined from said first message.

In said step 201 a test is performed to determine if said first message relates to a product known to have warranty.

In case said information about said product received in said first message is found in said data base, said product is known to have warranty. Otherwise said product doesn't have warranty.

In case said product is known to have warranty a step 202 is executed. Otherwise a step 203 is executed.

In said step 203 said error message "no warranty" is sent.

### Afterwards said first method ends.

In said step 202 a test is performed to determine it said identifier is already stored in said database. Finding said identifier in said database means that said customer identified by said identifier has warranty entries in said data base already. In case said identifier is found in said database, a step 204 is executed. Otherwise a step 205 is executed.

In said step 205 a new identifier entry is created in said database. This means that said customer identified by said identifier is added as a new customer. Afterwards said step 204 is executed.

In said step 204 said warranty information is added to said data base. To this end said information about said warranty period is read from storage. For example said warranty start date and said warranty period matching said information about said product, e,g, said Universal Product Code or said European Article Number are looked up in said data base.

### Afterwards a step 206 is executed.

In said step 206 said warranty end date is determined from said warranty start date and said warranty period, e.g. by adding said warranty period to said warranty start date.

Said warranty start date is for example said current date at the time said first message is received.

### Afterwards a step 207 is executed.

In said step 207 said information about said warranty end date and said information about said product are stored and associated with said identifier received in said first message in said data base.

Optionally said shop name or said receipt number is stored and associated to said identifier as well in said database.

### Afterwards a step 208 is executed.

In said step 208 said reply, e.g. said string "Success", is sent as said result.

### Afterwards said first method ends.

Alternatively to looking up said information about said warranty period as described in step 200, said information about said warranty period may be received from said computer in said computer network 100. In this case in an additional step for example performed between said step 200 and said step 201, upon receipt of said first message a request is sent to said storage of said manufacturer of said product.

For example said hyper text markup language "GET" request including said information about said product, e.g. said Universal Product Code or said European Article Number is sent.

At the same time said timer is started in order to pause processing said first message until said timer has timed out or said response to said request from said storage of said manufacturer has been received.

Said response is for example said hyper text markup language response, for example including said warranty period as said integer number.

Furthermore said error message may be determined. For example said error message "time out" is determined in case said reply is not received within a predetermined period of time e.g. 1 second. For example said error message "no warranty" is determined, in case no warranty information is available in said data base or upon receipt of a respective reply from said storage of said manufacturer. For example in case said new warranty was not added to said data base successfully (e.g. due to an internal data base error) said string "not successful" is sent as said result.

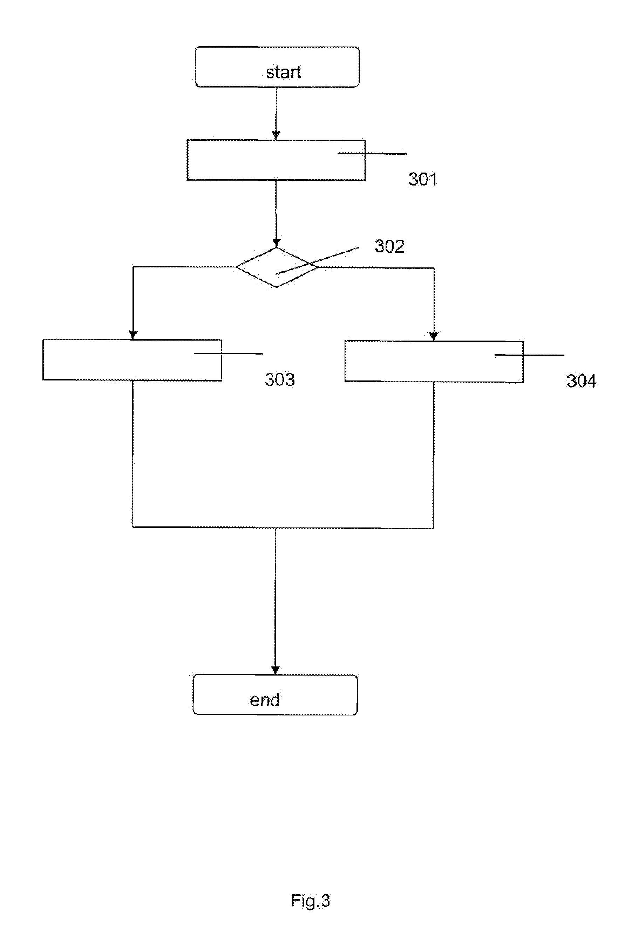

Fig. 3 schematically shows a second flow chart, showing some typical steps in a second method for managing warranty information.

Said second method starts, for example whenever said second message sent in order to confirm a warranty claim by a customer is received by said server 102.

For example said optional request type is included and said server 102 determines for each incoming message whether it contains said string "warranty claim" to identify in said second message.

### After the start a step 301 is executed,

In said step 301 said identifier and said information about said product are determined from said second message, e.g. said hyper text markup language "GET" request. Optionally said information about said shopping place may be determined from said second message.

### Afterwards a step 302 is executed.

In said step 302 a test is performed to determine if said second message relates to a valid warranty claim.

To this end said information about said warranty end date matching said identifier and said information about said product, e.g. said Universal Product Code or said European Article Number are looked up in said data base.

In case said warranty end date for the product identified by said information about said product received in said second message has not been reached for the customer identified by said identifier received in said second message, said warranty is confirmed as valid. Otherwise said warranty claim is invalid.

Optionally said information about said shopping place determined from said second message may be compared to said shopping place associated to said identifier and information about said product in said data base. This way it is confirmed that the warranty claim received in said second message is from the same store that sold the product. Validity of said warranty may be confirmed in this case only, if said shopping locations match.

In case said warranty claim is valid a step 303 is executed. Otherwise a step 304 is executed.

In said step 303 said string "confirmed" is send as said reply. Optionally said receipt number is sent in said result as well. Sending said receipt number as well allows to find a receipt for example in a dealer's transaction data base for additional confirmation or re-printing of said receipt in case the original receipt was lost and the manufacturer requires the dealer to present a receipt of the transaction to proof validity of said warranty claim. Afterwards said second method ends.

In said step 304 said string "invalid" is send as said reply. Afterwards said second method ends.

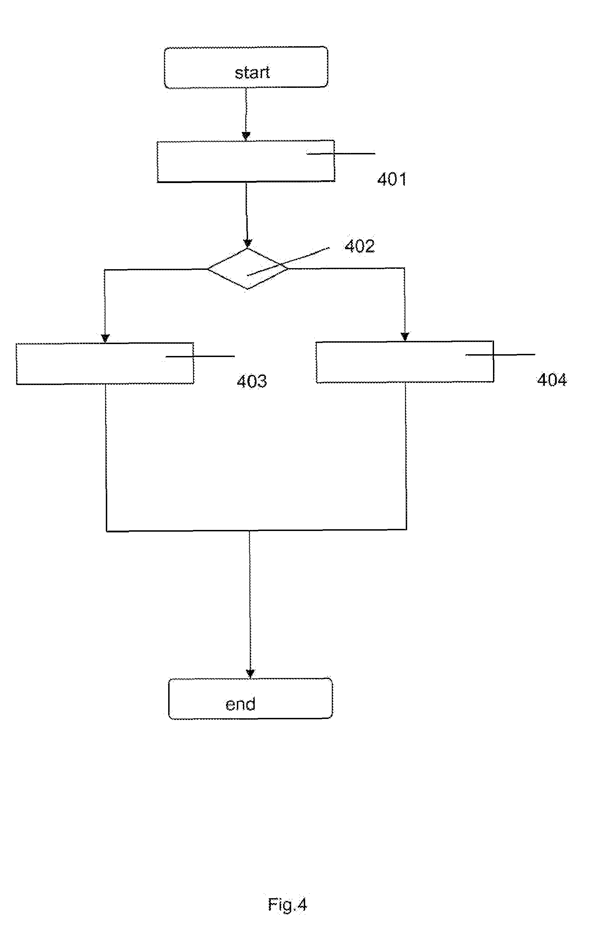

Additionally according to a third method, depicted in figure 4, warranty information is made available to a customer upon request.

Said third method for example starts whenever said third method is received by said server 102.

For example said optional request type is included in said third message, and said server 102 determines for each incoming message whether it contains said string "warranty summary" Lo identify in said third message.

### After the start a step 401 is executed.

In said step 401 said identifier is determined from said third message. Afterwards a step 402 is executed.

In said step 402 a test is performed to determine if said warranty information is available in said database. For example said identifier is looked up in said database. In case said database contains said identifier, a step 403 is executed. Otherwise a step 404 is executed.

In said step 403 warranty information associated with said identifier is looked up in said database and sent in a reply to said third message to said client 103. For example said list of all stored associations of said identifier with the respective information about said product and said warranty end date. Optionally said shop name or said receipt number may be in said list.

### Afterwards said third method ends.

In said step 404, i.e. in case no identifier or association is found in said database, said list is empty and said error message, e.g. "no warranty found" is sent to said client 103.

### Afterwards said third method ends.

Alternatively to sending said reply to said client 103, said web page may be used to display said warranty information.

The aforementioned encryption or signing may be applied to any of the aforementioned methods as well.

In a first modification of said third method, in an additional step that is executed after said step 403, a customer review feature is provided. Said customer review feature is for example displayed as part of said web page allowing said customer to enter a review text for any of said products that are associated with said identifier identifying said customer in said database.

Methods for prompting for customer review text are well known to the person skilled in the art and not explained here further.

Afterwards said customer review text is associated with said information about said product and said identifier and stored in said database.

Said customer review text is then made available to the public, e.g. via said web page. Methods for displaying reviews are well known to the person skilled in the art and not explained here.

In a second modification of said third method, in an additional step that is executed after said step 403, a notification service is provided to all buyers of said product.

For example a list of products that require a notification, e.g. about a software or firmware update is stored on said server 102. In this case in said additional step, said information about said product associated with said identifier in said database is compared to said list, and if applicable notifications are displayed, e.g, via said web page.

This way said customer is informed in said warranty information or on said web page, e.g. about new firmware or software for products said user owns.

Alternatively said notification may be sent as said reply to said client 103.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles ot the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine executable or computer executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for managing warranty information in a computer network (100), **wherein**
- an information about a product is determined (200, 301, 401), in particular by a server (102) from a message,
- an information about a warranty associated with said product is determined (202, 204, 302, 402) depending on said information about said product, in particular by said server (102),
- an identifier identifying a customer is determined (200, 301, 401), in particular by said server (102) from said message, and
- a storage comprises information about said identifier associated with said information about said warranty.

2. The method according to claim 1, wherein
- said information about, said warranty, said information about said product and said identifier are associated and stored (207), in particular in a data base.

3. The method according to claim 1, wherein
- customer review information is associated with said information about said identifier and stored, in particular in said data base.

4. The method according to claim 1, wherein a notification, in particular about said product, is sent depending on information about said identifier and said information about said product.

5. The method according to claim 1, wherein
- a test is performed (302) to determine whether said warranty associated with said product is valid,
- a message confirming said warranty, in particular comprising a receipt number, is sent (303) in case said warranty is valid.

6. The method according to claim 3, wherein said test comprises of looking up (302) said information about said warranty associated with said identifier and said information about said product, in particular in said data base.

7. The method according to claim 1, wherein information about a shopping place, a receipt number or a warranty period is determined (201, 301), in particular from said message, and wherein said storage comprises said information about said shopping place, said receipt number or said warranty period associated with said information about said identifier or said, information about said warranty.

8. The method according to claim 3 and 5, wherein said test comprises of looking up (302) said information about said shopping place associated to said identifier and said information about, said product, in particular in said data base.

9. A system for managing warranty information in a computer network (100), **wherein**
- a server (102) is adapted to determine an information about a product (200, 301, 401), in particular from a message,
- said server (102) is adapted to determine an information about a warranty associated with said product depending on said information about said product (202, 204, 302, 402),
- said server (102) is adapted to determine an identifier identifying a customer (200, 301, 401), in particular from said message, and
- a storage comprises information about said identifier associated with said information about said warranty
- a terminal (101) is adapted to read said identifier from an electronic token and send a message comprising said identifier and said information about said product.

10. A server (102) for managing warranty information in a computer network (100), **adapted to**
- determine an information about a product (200, 301, 401), in particular from a message,
- determine an information about a warranty associated with said product depending on said information about said product (202, 204, 302, 402),
- determine an identifier identifying a customer (200, 301, 401), in particular from said message, and
- comprise information about said identifier associated with said information about said warranty

11. A terminal (101) for managing warranty information in a computer network (100), **adapted to** read said identifier from an electronic token and send a message comprising said identifier and said information about said product.

12. A computer program for managing warranty information in a computer network (100), **wherein** said computer program, when executed on a computer, causes the computer to
- determine (200, 301, 401) an information about a product, in particular from a message,
- determine (202, 204, 302, 402) an information about a warranty associated with said product depending on said information about said product,
- determine (200, 301, 401) an identifier identifying a customer, in particular from said message, and
- store information about said identifier associated with said information about said warranty.

13. A computer program product for managing warranty information in a computer network (100) comprising a computer usable medium having a computer readable program, **wherein** said computer readable program, when executed on a computer, causes the computer to
- determine (200, 301, 401) an information about a product, in particular from a message,
- determine (202, 204, 302, 402) an information about a warranty associated with said product depending on said information about said product,
- determine (200, 301, 401) an identifier identifying a customer, in particular from said message, and
- store information about said identifier associated with said information about said warranty.
